# EUROPÄISCHE PATENTSCHRIFT

(11) **EP 3 549 066 B1**
(45) Veröffentlichungstag und Bekanntmachung des Hinweises auf die Patenterteilung: **31.03.2021**
(21) Anmeldenummer: 17808064.4
(22) Anmeldetag: 29.11.2017
(51) Int. Cl.: G06K 13/08

(54) **VERRIEGELUNGSVORRICHTUNG ZUR VERRIEGELUNG EINER SCHUBLADE EINES KARTENLESERS**
LOCKING DEVICE FOR LOCKING A TRAY OF A CARD READER
DISPOSITIF DE VERROUILLAGE POUR LE VERROUILLAGE D'UN TIROIR D'UN LECTEUR DE CARTES

(30) Priorität: 30.11.2016 DE 102016123078
(43) Veröffentlichungstag der Anmeldung: 09.10.2019
(73) Patentinhaber: Amphenol-Tuchel Electronics GmbH, 74080 Heilbronnn (DE)
(72) Erfinder: BERTSCH, Michael, 74080 Heilbronn (DE)
(74) Vertreter: Staeger & Sperling Partnerschaftsgesellschaft mbB
(86) Internationale Anmeldenummer: PCT/EP2017/080824
(87) Internationale Veröffentlichungsnummer: WO 2018/099971

(56) Entgegenhaltungen:
- WO-A1-2013/080621
- DE-A1-102010 026 811
- DE-A1-102015 224 025
- US-B1- 6 595 425

## Beschreibung

Die Erfindung betrifft eine Verriegelungsvorrichtung zur Verriegelung einer Schublade eines Kartenlesers.

Im Stand der Technik sind verschiedene Verriegelungsvorrichtungen für Karten in Kartenlesern oder einer Schublade eines Kartenlesers bekannt. Die bekannten Verriegelungsvorrichtungen eignen sich jedoch meist nicht für den Einsatz in Bereichen, in denen ein unbeabsichtigtes Auswerfen der Schublade aus dem Kartenleser verhindert werden soll. Durch Beschleunigungen und Erschütterungen kommt es in vielen Fällen zu einem unbeabsichtigten Entriegeln der Schublade. Die für einen kurzen Moment entriegelte Schublade verrutscht dann ggf. in ihrer Position und verriegelt dadurch nicht mehr. Der Kontakt zwischen den Kontakten der Karte und den Kontakten des Kartenlesers ist dadurch unterbrochen oder zumindest nicht weiter gewährleistbar.

Aus der US 6,595,425 B1 ist ein tragbares Informationsgerät mit einem PC-Kartensteckplatz bekannt, ausgestattet mit einem Kartensperrmechanismus, der in betrieblicher Verbindung mit dem Einsetzen der PC-Karte betätigt wird, um einen Diebstahl der PC-Karte zu verhindern und die Benutzerfreundlichkeit zu verbessern. Wenn eine PC-Karte in eine Öffnung eingeführt wird, wird ein Freigabeträgerelement, das in Verbindung mit der PC-Karte arbeitet, betätigt und ein Seitenarm wird in operativer Verbindung mit dem Freigabeträgerelement nach vorne gedrückt.

Der Erfindung liegt deshalb die Aufgabe zugrunde, die vorbesagten Nachteile zu überwinden und eine Verriegelungsvorrichtung zur Verriegelung einer Schublade eines Kartenlesers bereitzustellen, die bei Beschleunigungen das unbeabsichtigte Entriegeln des Kartenlesers bzw. der Schublade des Kartenlesers verhindert.

Diese Aufgabe wird durch die Merkmalskombination gemäß Patentanspruch 1 gelöst.

Erfindungsgemäß wird eine Verriegelungsvorrichtung zur Verriegelung einer Schublade eines Kartenlesers vorgeschlagen. Die Verriegelungsvorrichtung umfasst eine drehbar gelagerte Primärverriegelung zur Verriegelung der Schublade in ihrer Leseposition sowie eine von einer entriegelten Position zu einer verriegelten Position bewegbare Sekundärverriegelung zur Verriegelung der Primärverriegelung. Die Sekundärverriegelung verriegelt bei einer Erschütterung oder einer Beschleunigung des Kartenlesers die Primärverriegelung, sodass die Primärverriegelung gegen ein unbeabsichtigtes Entriegeln geschützt ist.

Die Sekundärverriegelung ist Schwerkraft bzw. Trägheitskraft betätigt sowie Schwerkraft bzw. Trägheitskraft gesteuert.

In einer vorteilhaften Ausgestaltungsvariante ist die Sekundärverriegelung gegen eine Federkraft einer Rückstellfeder von der entriegelten Position zu der verriegelten Position bewegbar. Die Rückstellfeder stellt bei einer fehlenden Betätigung (d. h. im Ruhezustand oder wenn keine Beschleunigungen auftreten) die Ausgangsposition bzw. entriegelte Position der Sekundärverriegelung wieder her.

Von Vorteil ist bei einer weiteren Ausgestaltungsvariante ferner, dass die drehbar gelagerte Primärverriegelung eine Drehklinke umfasst, die von einer ersten Position durch eine Bewegung eines Magnetstößels in eine Stößelrichtung in eine zweite Position drehbar ist. Die erste Position ist dabei die Position in der die Kartenschublade bzw. Schublade in dem Kartenleser verriegelt ist, wohingegen die zweite Position die Position ist, in der die Schublade in dem Kartenleser entriegelt ist. Der Magnetstößel ist über eine Kupplung mit der Drehklinke verbunden, wobei der Magnetstößel außerhalb des Drehpunkts der drehbar gelagerten Drehklinke angeordnet ist, so dass die Längsbewegung des Magnetstößels in eine Drehbewegung um den Drehpunkt umsetzbar ist.

Eine Ausgestaltungsalternative, bei der die Primärverriegelung und die Sekundärverriegelung in einem eine Führungsnut ausbildenden Gehäuse angeordnet sind, ist ebenfalls vorteilhaft. An der Drehklinke ist ein Sperrmittel angeordnet, die Sekundärverriegelung ist ein in der Führungsnut geführter Schieber, an dem ein zu dem Sperrmittel weisendes und zu dem Sperrmittel korrespondierendes Gegensperrmittel angeordnet ist.

Vorteilhafterweise ist ferner eine Längsrichtung der Führungsnut parallel zu der Stößelrichtung, sodass der Schieber in Stößelrichtung bewegbar ist. Der Schieber ist an zumindest drei Seiten von der Führungsnut geführt, sodass der Schieber entlang der Längsachse der Führungsnut beweglich ist.

Von Vorteil ist des Weiteren, dass ein Ende bzw. eine Endfläche in eine Längsrichtung des Schiebers durch die Rückstellfeder gegen ein Ende bzw. eine Endfläche der Führungsnut in eine Längsrichtung der Führungsnut gelagert ist. Die Rückstellfeder stützt dadurch den Schieber gegen die Endfläche der Führungsnut ab, sodass der Schieber gegen die Federkraft der Rückstellfeder in Richtung der Endfläche der Führungsnut beweglich ist. Der Schieber wird bei einer Federauslenkung durch das Ein- bzw. Ausfedern der Rückstellfeder in seine Ursprungsposition geschoben.

Die verriegelte Position ist bei einer vorteilhaften Ausgestaltungsvariante dadurch bestimmt, dass das Sperrmittel und das Gegensperrmittel in einander eingreifen. Die entriegelte Position ist dadurch bestimmt, dass das Sperrmittel und das Gegensperrmittel nicht in einander eingreifen.

Das Sperrmittel ist bei einer Ausformungsvariante vorteilhafterweise eine sich in der ersten Position der Drehklinke in die Längsrichtung der Führungsnut erstreckende Nut. Die Seitenflächen der Nut sind parallel oder einen Winkel zwischen sich einschließend ausbildbar, wobei ein Winkel zwischen den Seitenflächen von 10° bis 45° besonders vorteilhaft ist.

Das Gegensperrmittel ist vorteilig ein sich in die Längsrichtung der Führungsnut erstreckender und zu der Nut korrespondierender Vorsprung. Der Vorsprung ist ausgebildet die Nut zumindest zum Teil zu ergänzen und in die Nut eingreifen zu können.

Der Vorsprung ist ferner gegenüber der Nut unmittelbar angrenzend angeordnet. Die Anordnung ist bei einer Ausgestaltungsvariante besonders vorteilhaft, da bei einer Bewegung des Vorsprungs in Stößelrichtung auf die Nut zu, der Vorsprung und die Nut unmittelbar in Eingriff sind.

Dadurch, dass die Nut an der Drehklinke angeordnet ist und der Vorsprung in sie eingreift, wird eine Drehung der drehbar gelagerten Drehklinke verhindert, da die entstehende Kraft der Drehung über die Nut auf den Vorsprung, von dem Vorsprung auf den Schieber und von dem Schieber auf eine Seitenfläche der Führungsnut also auf das Gehäuse abgeleitet wird.

Bei einer vorteilhaften Variante ist der Schieber in der entriegelten Position an einem Ende bzw. an einer Endfläche in eine Längsrichtung des Schiebers von der Rückstellfeder gegen einen Anschlag in dem Gehäuse abgestützt und an einem anderen Ende bzw. einer anderen Endfläche in die Längsrichtung des Schiebers gegen ein Ende der Führungsnut abgestützt, wobei die Längsrichtung des Schiebers parallel zu der Stößelrichtung ist. Die Endfläche des Schiebers liegt dabei der anderen Endfläche des Schiebers gegenüber.

Die Rückstellfeder ist in einer vorteilhaften alternativen Ausbildungsvariante an einem Ende in Längsrichtung an dem Gehäuse und an einem anderen Ende in Längsrichtung an dem Schieber fixiert.

Dadurch, dass die Rückstellfeder fest mit dem Schieber verbunden ist, wird ein Anschlag oder eine Anschlagfläche gegen den der Schieber auf einer von der Rückstellfeder abgewandten Seite anliegt nicht benötigt. Der Schieber wird ohne eine Beschleunigung von der Rückstellfeder in der Führungsnut in seiner Position, z.B. der entriegelten Position, gehalten und nach einer Beschleunigung von der Rückstellfeder wieder auf seine Position gebracht.

Vorteilhafterweise ist die Rückstellfeder eine Druckfeder.

Das Gegensperrmittel der Sekundärverriegelung liegt bei einer vorteilhaften Ausgestaltungsvariante zwischen einem Rasthaken der Drehklinke und einer Koppelvorrichtung. Die Koppelvorrichtung ist eine Kopplung zwischen der Drehklinke und dem Magnetstößel und dient zur Übertragung der Bewegung des Magnetstößels auf die Drehklinke.

Vorteilhaft ist die Verwendung einer Verriegelungsvorrichtung zum Sichern einer Drehklinke, wobei der Schieber mit dem Gegensperrmittel bei einer Beschleunigung des Gehäuses in Stößelrichtung durch die Beschleunigung entlang der Führungsnut gegen die Federkraft der Rückstellfeder in die verriegelte Position bewegt und das Gegensperrmittel mit dem Sperrmittel in Eingriff gebracht wird. In der verriegelten Position verhindern das Sperr- und das Gegensperrmittel eine Drehung der Drehklinke aus der ersten Position in die zweite Position, wobei der Schieber mit dem Gegensperrmittel bei einer gleichbleibenden Geschwindigkeit des Gehäuses von der Federkraft der Rückstellfeder in die entriegelte Position geschoben wird und das Gegensperrmittel und das Sperrmittel aus dem Eingriff gebracht werden.

Ferner ist eine Verwendung eines Kartenlesers mit einer Verriegelungsvorrichtung einem Fahrzeug oder einer Vorrichtung, die einer Beschleunigung ausgesetzt ist vorteilhaft. Ein Beispiel für die Verwendung in einem Fahrzeug ist ein Fahrtenschreiber, wie sie in LKWs, Reisebussen oder anderen kommerziell genutzten Fahrzeugen zum Einsatz kommen.

Die Reibungskräfte zwischen Führungsnut und Schieber, so wie das Gewicht und die Positionierung des Schiebers mit dem Gegensperrmittel sind so gewählt, dass der Schieber bei einer Beschleunigung in das Sperrmittel eindringt und die Drehklinke verriegelt, bevor die Drehklinke von dem Magnetstößel bewegt wird.

Die vorstehend offenbarten Merkmale sind beliebig kombinierbar soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: ein Ausschnitt eines Kartenlesers mit einer verriegelten Primärverriegelung und einer Sekundärverriegelung;
- Fig. 2: ein Ausschnitt eines Kartenlesers mit einer entriegelten Primärverriegelung und einer Sekundärverriegelung;
- Fig. 3: ein Ausschnitt eines Kartenlesers mit einer Primärverriegelung und einer verriegelten Sekundärverriegelung.

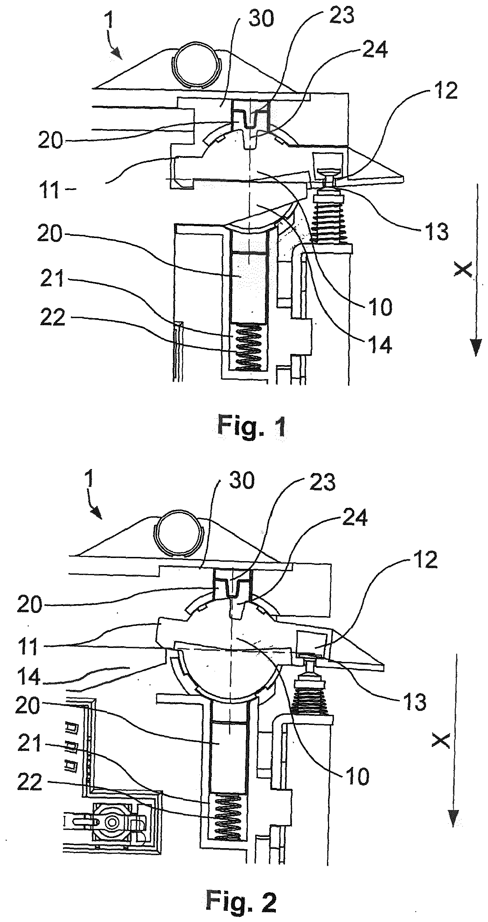

Die Figur 1 zeigt einen Ausschnitt eines Kartenlesers mit der Verriegelungsvorrichtung 1. Die Kartenschublade greift mit ihrer Rastlasche 14 in den Rasthaken 11 der Drehklinke 10 ein. Der Magnetstößel 13 ist unbetätigt und wird von einer Magnetstößelfeder in Richtung X gedrückt, wodurch er in seiner Position in der Kupplung 12 verbleibt. Das Gehäuse 30 bildet eine Führungsnut 21 aus. Die Führungsnut 21 erstreckt sich zentriert unter dem Drehpunkt der Drehklinke 10, um den die Drehklinke 10 von dem Magnetstößel 13 drehbar ist. In der Führungsnut 21 ist der Schieber 20 angeordnet, der durch die Rückstellfeder 22 abgestützt ist. An einer Seite des Schiebers 20, die zu der Rückstellfeder 22 angewandt ist, bildet der Schieber den v-förmigen Vorsprung 23 aus. Der Vorsprung 23 korrespondiert zu der Nut 24 die von der Drehklinke ausgebildet wird. Die Stellung der Drehklinke 10, des Magnetstößels 13 und des Schiebers 20 entspricht der ersten Position der Primärverriegelung. Die Kartenschublade wird durch das einhacken ihrer Rastlasche 14 mit dem Rasthaken 11 verriegelt und kann nicht aus dem Kartenleser bewegt werden.

In Figur 2 ist eine Verriegelungsvorrichtung 1 wie in Figur 1 gezeigt. Die Primärverriegelung befindet sich jedoch in ihrer zweiten Position. Der Magnetstößel 13 ist betätigt, also gegen die Kraft der Magnetstößelfeder eingezogen.

Durch den Magnetstößel 13 und die Kupplung 12 ist die Drehklinke so gedreht, dass sich der Rasthaken 11 nicht im Eingriff mit der Rastlasche 14 befindet. Die Schublade kann dadurch aus dem Kartenleser zumindest zum Teil heraus bewegt werden. Die Sekundärverriegelung befindet sich nicht im Eingriff und die Primärverriegelung kann ihre Funktion erfüllen.

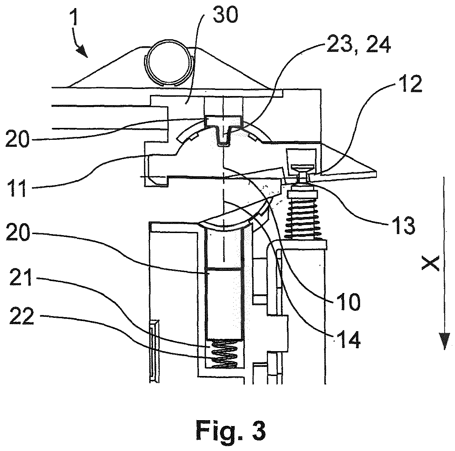

In Figur 3 ist eine Verriegelungsvorrichtung 1 wie in Figur 1 und 2 gezeigt. Der Kartenleser ist in Richtung X einer Beschleunigung ausgesetzt. Ohne Sekundärverriegelung würde der Magnetstößel 13 durch die Trägheitskräfte gegen die Kraft der Magnetstößelfeder bewegt, wodurch die Drehklinke 10 gedreht und der Rasthaken 11 aus dem Eingriff mit der Rastlasche 14 gebracht werden würde. Durch die Sekundärverriegelung bewegt sich der Vorsprung 23 in die Nut 24 und verhindert eine Drehbewegung der Drehklinke 10, bevor die Drehklinke 10 von dem der Beschleunigung ausgesetzten Magnetstößel 13 gedreht werden kann. Endet die Beschleunigung wird der Vorsprung 23 aus der Nut 24 durch die Rückstellfeder 22 heraus gedrückt und die Primärverriegelungsvorrichtung kann die Schublade mit der Rastlasche 14 wieder von dem Rasthaken 11 trennen bzw. mit diesem verrasten. Für den Zeitraum der Beschleunigung ist die Primärverriegelung durch die Sekundärverriegelung gesichert.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

### Bezugszeichenliste

- 1: Verriegelungsvorrichtung

- 10: Drehklinke
- 11: Rasthaken
- 12: Kupplung
- 13: Magnetstößel
- 14: Rastlasche

- 20: Schieber
- 21: Führungsnut
- 22: Rückstellfeder
- 23: Vorsprung
- 24: Nut

- 30: Gehäuse

- X: Richtung

## Patentansprüche

1. Verriegelungsvorrichtung (1) zur Verriegelung einer Schublade eines Kartenlesers umfassend eine drehbar gelagerte Primärverriegelung zur Verriegelung der Schublade in ihrer Leseposition sowie einer von einer entriegelten Position zu einer verriegelten Position bewegbaren Sekundärverriegelung zur Verriegelung der Primärverriegelung, **dadurch gekennzeichnet, dass** die drehbar gelagerte Primärverriegelung eine Drehklinke (10) umfasst, die von einer ersten Position durch eine Bewegung eines Magnetstößels (13) in eine Stößelrichtung in eine zweite Position drehbar ist und die Primärverriegelung und die Sekundärverriegelung in einem eine Führungsnut (21) ausbildendes Gehäuse (30) angeordnet sind, an der Drehklinke (10) ein Sperrmittel angeordnet ist, die Sekundärverriegelung ein in der Führungsnut (21) geführter Schieber (20) ist, an dem ein zu dem Sperrmittel weisendes und zu dem Sperrmittel korrespondierendes Gegensperrmittel angeordnet ist.

2. Verriegelungsvorrichtung (1) nach Anspruch 1, wobei die Sekundärverriegelung gegen eine Federkraft einer Rückstellfeder (22) von der entriegelten Position zu der verriegelten Position bewegbar ist.

3. Verriegelungsvorrichtung (1) nach Anspruch 1, wobei eine Längsrichtung der Führungsnut (21) parallel zu der Stößelrichtung ist, sodass der Schieber (20) in Stößelrichtung bewegbar ist.

4. Verriegelungsvorrichtung (1) nach Anspruch 2, wobei ein Ende des Schiebers (20) durch die Rückstellfeder (22) gegen ein Ende der Führungsnut (21) gelagert ist.

5. Verriegelungsvorrichtung (1) nach einem der vorhergehenden Ansprüche, wobei die verriegelte Position dadurch bestimmt ist, dass das Sperrmittel und das Gegensperrmittel in einander eingreifen, und die entriegelte Position dadurch bestimmt ist, dass das Sperrmittel und das Gegensperrmittel nicht in einander eingreifen.

6. Verriegelungsvorrichtung (1) nach einem der vorhergehenden Ansprüche, wobei das Sperrmittel eine sich in der ersten Position der Drehklinke (10) in die Längsrichtung der Führungsnut (21) erstreckende Nut (24) ist.

7. Verriegelungsvorrichtung (1) nach einem der vorhergehenden Ansprüche, wobei das Gegensperrmittel ein sich in die Längsrichtung der Führungsnut (21) erstreckender und zu der Nut (24) korrespondierender Vorsprung (23) ist.

8. Verriegelungsvorrichtung (1) nach einem der vorhergehenden Ansprüche, wobei der Vorsprung (23) gegenüber der Nut (24) unmittelbar angrenzend angeordnet ist, sodass bei einer Bewegung des Vorsprungs (23) in Stößelrichtung auf die Nut (24) zu, der Vorsprung (23) und die Nut (24) unmittelbar in Eingriff sind.

9. Verriegelungsvorrichtung (1) nach einem der vorhergehenden Ansprüche, wobei der Schieber (20) in der entriegelten Position an einem Ende in eine Längsrichtung des Schiebers (20) von der Rückstellfeder (22) gegen einen Anschlag in dem Gehäuse abgestützt ist und an einem anderen Ende in die Längsrichtung des Schiebers (20) gegen ein Ende der Führungsnut (21) abgestützt ist, wobei die Längsrichtung des Schiebers (20) parallel zu der Stößelrichtung ist.

10. Verriegelungsvorrichtung (1) nach einem der vorhergehenden Ansprüche, wobei die Rückstellfeder (22) an einem Ende an dem Gehäuse und an einem anderen Ende an dem Schieber (20) fixiert ist.

11. Verriegelungsvorrichtung (1) nach einem der vorhergehenden Ansprüche, wobei die Rückstellfeder (22) eine Druckfeder ist.

12. Verriegelungsvorrichtung (1) nach einem der vorhergehenden Ansprüche, wobei das Gegensperrmittel der Sekundärverriegelung zwischen einem Rasthaken der Drehklinke (10) und einer Kopplung zwischen der Drehklinke (10) und dem Magnetstößel (13) liegt.

13. Verwendung einer Verriegelungsvorrichtung (1) nach einem der vorhergehenden Ansprüche, zum Sichern einer Drehklinke (10) wobei der Schieber (20) mit dem Gegensperrmittel bei einer Beschleunigung des Gehäuses in Stößelrichtung durch die Beschleunigung entlang der Führungsnut (21) gegen die Federkraft der Rückstellfeder (22) in die verriegelte Position bewegt und das Gegensperrmittel mit dem Sperrmittel in Eingriff gebracht wird, um eine Drehung der Sperrklinke aus der ersten Position in die zweite Position zu blockieren, wobei der Schieber (20) mit dem Gegensperrmittel bei einer gleichbleibenden Geschwindigkeit des Gehäuses von der Federkraft der Rückstellfeder (22) in die entriegelte Position geschoben wird und das Gegensperrmittel und das Sperrmittel aus dem Eingriff gebracht werden.

14. Verwendung eines Kartenlesers mit einer Verriegelungsvorrichtung (1) nach einem der Ansprüche 1 bis 12 in einem Fahrzeug oder einer Vorrichtung, die einer Beschleunigung ausgesetzt ist.

## Claims

1. Locking device (1) for locking a drawer of a card reader, comprising a rotatably mounted primary lock for locking the drawer in its reading position and a secondary lock, which is movable from an unlocked position to a locked position, for locking the primary lock, **characterized in that** the rotatably mounted primary lock comprises a rotary catch (10), which is rotatable from a first position into a second position by a movement of a magnetic plunger (13) in a plunger direction, and the primary lock and the secondary lock are arranged in a housing (30) forming a guide slot (21), a blocking means is arranged on the rotary catch (10), the secondary lock is a slider (20) which is guided in the guide slot (21) and on which a counterpart blocking means pointing towards the blocking means and corresponding to the blocking means is arranged.

2. Locking device (1) according to Claim 1, wherein the secondary lock is movable from the unlocked position to the locked position counter to a spring force of a restoring spring (22).

3. Locking device (1) according to Claim 1, wherein a longitudinal direction of the guide slot (21) is parallel to the plunger direction, such that the slider (20) is movable in the plunger direction.

4. Locking device (1) according to Claim 2, wherein one end of the slider (20) is supported by the restoring spring (22) against one end of the guide slot (21).

5. Locking device (1) according to one of the preceding claims, wherein the locked position is determined in that the blocking means and the counterpart blocking means engage in one another, and the unlocked position is determined in that the blocking means and the counterpart blocking means do not engage in one another.

6. Locking device (1) according to one of the preceding claims, wherein the blocking means is a slot (24) extending in the longitudinal direction of the guide slot (21) in the first position of the rotary catch (10).

7. Locking device (1) according to one of the preceding claims, wherein the counterpart blocking means is a protrusion (23) extending in the longitudinal direction of the guide slot (21) and corresponding to the slot (24).

8. Locking device (1) according to one of the preceding claims, wherein the protrusion (23) is arranged in a manner immediately adjoining the slot (24), such that, if the protrusion (23) moves towards the slot (24) in the plunger direction, the protrusion (23) and the slot (24) are directly engaged.

9. Locking device (1) according to one of the preceding claims, wherein, in the unlocked position, the slider (20) is supported, at one end in a longitudinal direction of the slider (20), against a stop in the housing by the restoring spring (22) and is supported, at another end in the longitudinal direction of the slider (20), against one end of the guide slot (21), wherein the longitudinal direction of the slider (20) is parallel to the plunger direction.

10. Locking device (1) according to one of the preceding claims, wherein the restoring spring (22) is fixed at one end to the housing and at another end to the slider (20).

11. Locking device (1) according to one of the preceding claims, wherein the restoring spring (22) is a compression spring.

12. Locking device (1) according to one of the preceding claims, wherein the counterpart blocking means of the secondary lock lies between a latching hook of the rotary catch (10) and a coupling between the rotary catch (10) and the magnetic plunger (13).

13. Use of a locking device (1) according to one of the preceding claims for securing a rotary catch (10), wherein, when the housing is accelerated in the plunger direction, the slider (20) with the counterpart blocking means moves into the locked position counter to the spring force of the restoring spring (22) by the acceleration along the guide slot (21), and the counterpart blocking means is engaged with the blocking means in order to block rotation of the catch from the first position into the second position, wherein the slider (20) with the counterpart blocking means is pushed into the unlocked position by the spring force of the restoring spring (22) in the event of a constant speed of the housing, and the counterpart blocking means and the blocking means are disengaged.

14. Use of a card reader having a locking device (1) according to one of Claims 1 to 12 in a vehicle or a device that is subjected to an acceleration.

## Revendications

1. Dispositif de verrouillage (1) permettant de verrouiller un tiroir d'un lecteur de cartes, comprenant un verrou primaire, monté rotatif, pour verrouiller le tiroir dans sa position de lecture, ainsi qu'un verrou secondaire pouvant être déplacé d'une position déverrouillée à une position verrouillée pour verrouiller le verrou primaire, **caractérisé en ce que** le verrou primaire monté rotatif comprend un loquet rotatif (10) qu'un mouvement d'un poussoir magnétique (13) peut faire tourner d'une première position dans une direction de poussoir à une deuxième position, et le verrou primaire et le verrou secondaire sont disposés dans un boîtier (30) réalisant une rainure de guidage (21), un moyen de blocage est disposé sur le loquet rotatif (10), le verrou secondaire est un coulisseau (20), guidé dans la rainure de guidage (21), sur lequel est disposé un moyen de contre-blocage tourné vers le moyen de blocage et correspondant au moyen de blocage.

2. Dispositif de verrouillage (1) selon la revendication 1, dans lequel le verrou secondaire peut être déplacé de la position déverrouillée à la position verrouillée contre une force de ressort d'un ressort de rappel (22).

3. Dispositif de verrouillage (1) selon la revendication 1, dans lequel une direction longitudinale de la rainure de guidage (21) est parallèle à la direction de poussoir de sorte que le coulisseau (20) peut être déplacé dans la direction de poussoir.

4. Dispositif de verrouillage (1) selon la revendication 2, dans lequel une extrémité du coulisseau (20) est montée contre une extrémité de la rainure de guidage (21) par le ressort de rappel (22).

5. Dispositif de verrouillage (1) selon l'une quelconque des revendications précédentes, dans lequel la position verrouillée est déterminée en ce que le moyen de blocage et le moyen de contre-blocage sont en prise l'un dans l'autre, et la position déverrouillée est déterminée en ce que le moyen de blocage et le moyen de contre-blocage ne sont pas en prise l'un dans l'autre.

6. Dispositif de verrouillage (1) selon l'une quelconque des revendications précédentes, dans lequel le moyen de blocage est une rainure (24) s'étendant dans la première position du loquet rotatif (10) dans la direction longitudinale de la rainure de guidage (21).

7. Dispositif de verrouillage (1) selon l'une quelconque des revendications précédentes, dans lequel le moyen de contre-blocage est une saillie (23) s'étendant dans la direction longitudinale de la rainure de guidage (21) et correspondant à la rainure (24).

8. Dispositif de verrouillage (1) selon l'une quelconque des revendications précédentes, dans lequel la saillie (23) est disposée à l'opposé de la rainure (24) de manière directement adjacente de sorte que lors d'un mouvement de la saillie (23) dans la direction de poussoir vers la rainure (24), la saillie (23) et la rainure (24) se trouvent directement en prise.

9. Dispositif de verrouillage (1) selon l'une quelconque des revendications précédentes, dans lequel, dans la position déverrouillée à une extrémité, le coulisseau (20) est soutenu par le ressort de rappel (22) contre la butée dans le boîtier dans une direction longitudinale du coulisseau (20), et à une autre extrémité, il est soutenu dans la direction longitudinale du coulisseau (20) contre une extrémité de la rainure de guidage (21), la direction longitudinale du coulisseau (20) étant parallèle à la direction de poussoir.

10. Dispositif de verrouillage (1) selon l'une quelconque des revendications précédentes, dans lequel le ressort de rappel (22) est fixé au boîtier à une extrémité, et est fixé au coulisseau (20) à une autre extrémité.

11. Dispositif de verrouillage (1) selon l'une quelconque des revendications précédentes, dans lequel le ressort de rappel (22) est un ressort de compression.

12. Dispositif de verrouillage (1) selon l'une quelconque des revendications précédentes, dans lequel le moyen de contre-blocage du verrou secondaire se situe entre un crochet d'encliquetage du loquet rotatif (10) et un accouplement entre le loquet rotatif (10) et le poussoir magnétique (13).

13. Utilisation du dispositif de verrouillage (1) selon l'une quelconque des revendications précédentes, pour sécuriser un loquet rotatif (10), dans lequel le coulisseau (20) avec le moyen de contre-blocage, lors d'une accélération du boîtier dans la direction de poussoir, est déplacé par l'accélération le long de la rainure de guidage (21) contre la force de ressort du ressort de rappel (22) dans la position verrouillée, et le moyen de contre-blocage est mis en prise avec le moyen de blocage pour bloquer une rotation du loquet de blocage de la première position à la deuxième position, dans lequel le coulisseau (20) avec le moyen de contre-blocage, à une vitesse constante du boîtier, est poussé par la force de ressort du ressort de rappel (22) dans la position déverrouillée, et le moyen de contre-blocage et le moyen de blocage sont mis hors prise.

14. Utilisation d'un lecteur de cartes doté d'un dispositif de verrouillage (1) selon l'une quelconque des revendications 1 à 12 dans un véhicule ou un dispositif qui est soumis à une accélération.
